# EUROPEAN PATENT APPLICATION

(11) **EP 2 003 032 A2**
(43) Date of publication of application: **17.12.2008**
(21) Application number: 06823127.3
(22) Date of filing: 08.11.2006
(51) Int. Cl.: B60T 7/12

(54) **BRAKE DEVICE FOR VEHICLE**

(30) Priority: 31.03.2006 JP 2006101135
(71) Applicant: Isuzu Motors Limited, Tokyo 140-8722 (JP)
(72) Inventor: FUJIMURA, Takeshi, Fujisawa-shi, Kanagawa 252-8501 (JP)
(74) Representative: Müller - Hoffmann & Partner
(86) International application number: PCT/JP2006/322223
(87) International publication number: WO 2007/116558

(57) **Abstract**

The present invention includes a braking control unit 15, which generates a second predetermined braking force upon reception of a forced braking instruction signal from a forced braking instruction unit 14 from when a determination unit 13 has determined it is in a first pre-collision state with a high possibility of a vehicle and an object making contact until it determines it is in a second pre-collision state with a higher possibility of the vehicle and the object making contact than in the first pre-collision state.

## Description

### Technical Field

The present invention relates to a vehicle braking device.

### Background Art

A vehicle including a braking control device, which annunciates a warning to a driver and generates an automatically braking force a predetermined period of time after annunciation of a warning in the case where it has been determined based on the relative distance and relative velocity of a vehicle relative to an object detected by an object detection sensor such as a laser radar that there is a high possibility of the vehicle making contact with an object, and in the case where the driver depresses the brake pedal after the braking force has been generated, further generates a braking force corresponding to the depression of the brake pedal has been disclosed in Japanese Unexamined Patent Application Publication No. Hei 11-227582.
[Patent Document 1] Japanese Unexamined Patent Application Publication No. Hei 11-227582

### Disclosure of Invention

### [Problem to Be Solved By the Invention]

However, with the above conventional vehicle, when the driver judges based on annunciation of there to be a high possibility of the vehicle making contact with an object that there is great urgency and thus depresses the brake pedal, the vehicle may not sufficiently decelerate.

The present invention is created for resolving the above-described problem, and aims to provide a vehicle braking device in a vehicle, which is provided with a function of forcedly imposing a predetermined braking force when it has been determined to be in a first pre-collision state with a high possibility of making contact with an object, and then it is determined to be in a second pre-collision state with a higher possibility of making contact with the object than in the first pre-collision state, where the vehicle braking device is capable of sufficiently decelerating a vehicle in the case where a driver's braking manipulation is performed between when it is determined to be in the first pre-collision state and when it is determined to be in the second pre-collision state.

### [Means of Solving the Problem]

In order to reach the aforementioned objective, the present invention includes object detecting means, braking means, first determination means, second determination means, annunciation means, breaking control means, and forced braking instruction means.

The object detecting means detects relative distance and relative speed of the vehicle relative to an object existing in front of a vehicle in the traveling direction of the vehicle. The braking means generates a braking force on the vehicle. The first determining means determines based on the relative distance and the relative speed detected by the object detecting means whether or not the vehicle is in a first pre-collision state with a high possibility of the vehicle and the object making contact. The second determining means determines based on the relative distance and the relative speed detected by the object detecting means whether or not the vehicle is in a second pre-collision state with a higher possibility of the vehicle and the object making contact than in the first pre-collision state. The annunciation means annunciates to a driver of the vehicle that it is in the first pre-collision state when the first determination means has determined to be in the first pre-collision state. The braking control means operates the braking means to generate a first predetermined braking force when the second determination means has determined it is in the second pre-collision state after the first determination means has determined it is in the first pre-collision state. The forced braking instruction means detects existence of a braking request from the driver, and outputs a forced braking instruction signal when a braking request from the driver has been detected. The braking control means operates the braking means to generate a second predetermined braking force upon reception of the forced braking instruction signal from the forced braking instruction means from when the first determination means has determined it is in the first pre-collision state until the second determination means determines it is in the second pre-collision state. Note that magnitude of the second predetermined braking force may be the same as that of the first predetermined braking force, or may be the same as the maximum braking force generatable by the braking means.

With the above configuration, in the case where a braking request from the driver has been detected from when the first determination means has determined it is in the first pre-collision state until the second determination means determines it is in the second pre-collision state, the preset second predetermined braking force is imposed on the vehicle. Namely, by the driver performing braking manipulation when in the first pre-collision state, the preset second predetermined braking force may be generated before generation of the first predetermined braking force, and the vehicle may be sufficiently decelerated.

Furthermore, the forced braking instruction means may determine whether or not a detected braking request from the driver is urgent. In this case, the forced braking instruction means may output a forced braking instruction signal when the request is determined to be urgent, and not output a forced braking instruction signal when the request is determined to be not urgent.

With the above configuration, when a braking request from the driver is determined to be urgent, the second predetermined braking force is imposed on the vehicle, and when the braking request is determined to be not urgent, only normal braking force corresponding to the driver's braking manipulation is imposed on the vehicle instead of the second predetermined braking force. As a result, when the driver judges that it is unnecessary to hastily brake the vehicle and performs normal brake manipulation, improper imposing of excessive braking force on the vehicle may be prevented, and inconveniences such as uncomfortable feeling, poor riding comfort, and load collapse during driving operation may be avoided.

### [Results of Invention]

According to the vehicle braking device in a vehicle, according to the present invention, which is provided with a function of forcedly imposing a predetermined braking force when it has been determined to be in a first pre-collision state with a high possibility of making contact with an object and then it is determined to be in a second pre-collision state with a higher possibility of making contact with the object than in the first pre-collision state, the vehicle braking device allows sufficient deceleration of the vehicle when a driver's braking manipulation is performed between when it is determined to be in the first pre-collision state and when it is determined to be in the second pre-collision state.

### Brief Description of Drawings

FIG. 1 is a diagram schematically showing an entire vehicle braking device according to an embodiment of the present invention;
FIG. 2 is a block diagram schematically of the entire vehicle braking device according to the embodiment of the present invention;
FIG. 3 is a correlation chart between time to collision and distance showing the case of when there is no driver's braking request;
FIG. 4 is a correlation chart between time to collision and distance showing the case where a driver's braking request is urgent;
FIG. 5 is a correlation chart between time to collision and distance showing the case where a braking request by the driver does not require urgency;
FIG. 6 is a correlation chart between time to collision and distance showing the case of a normal state after it has been determined to be in a pre-collision state; and
FIG. 7 is a flowchart showing detailed control of the braking device in the vehicle according to the embodiment of the present invention.

### [Description of Reference Numerals]

- 1.: Engine
- 2.: Transmission
- 3.: Propeller shaft
- 4.: Front wheel
- 5.: Rear wheel
- 6.: Brake pedal
- 7.: Braking pressure sensor
- 8.: Object detecting sensor (object detecting means)
- 9.: Vehicle speed sensor
- 10.: Speaker (annunciation means)
- 11.: Disc brake (braking means)
- 12.: CPU
- 13.: Determination unit (first determining means, second determining means)
- 14.: Forced braking instruction unit (forced braking instructing means)
- 15.: Braking control unit (braking control means)

### Best Mode for Carrying Out the Invention

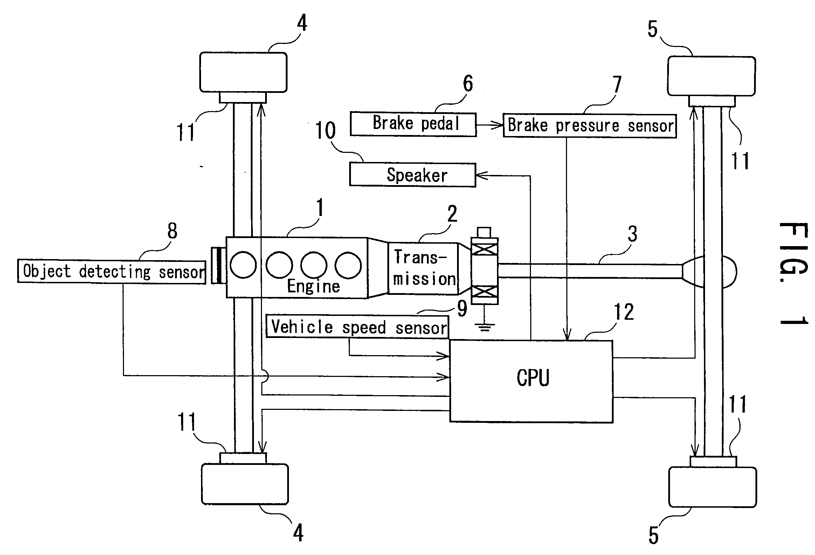

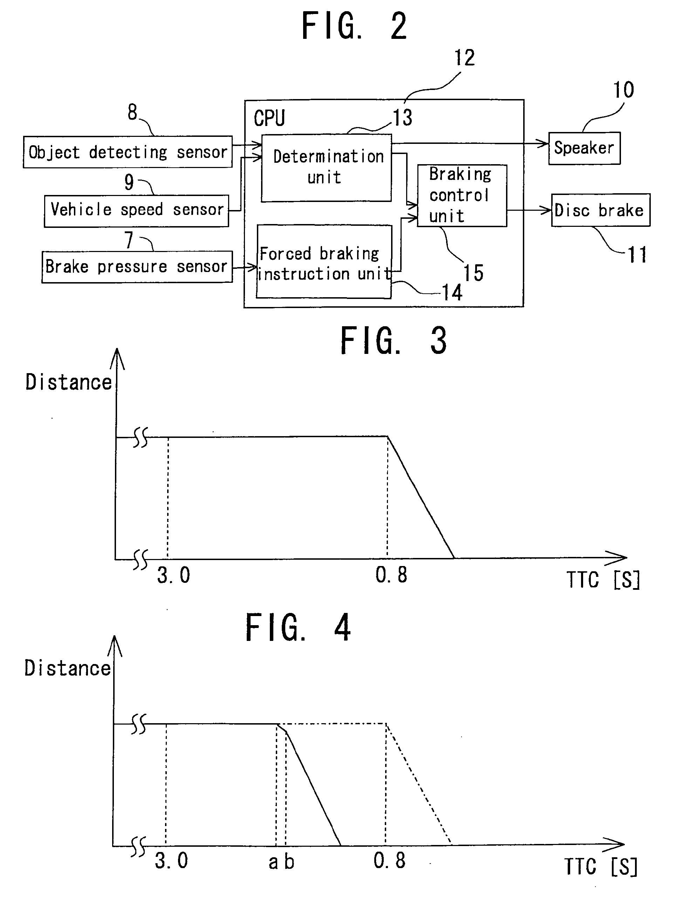

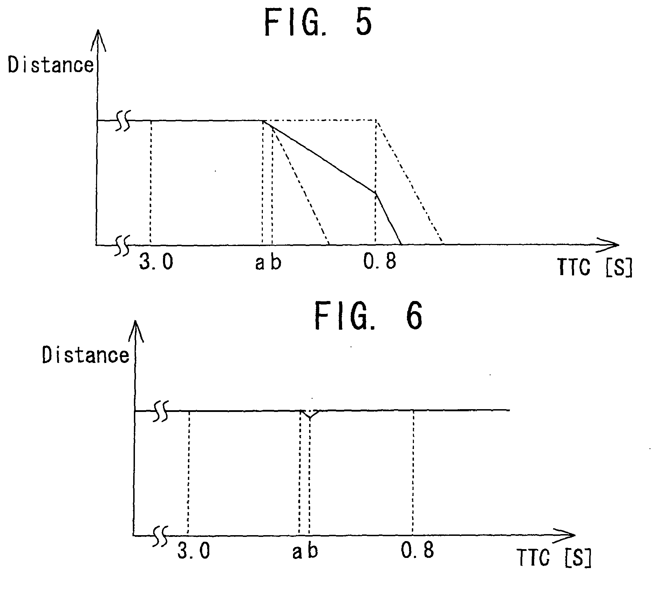

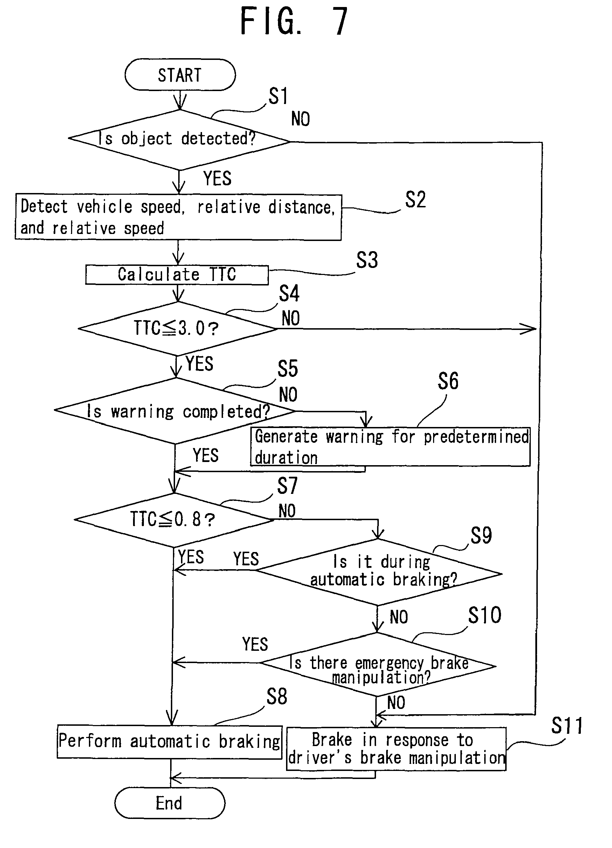

An embodiment of the present invention is described forthwith based on the appended drawings. FIG. 1 is a diagram schematically showing an entire braking device in a vehicle according to an embodiment of the present invention. FIG. 2 is a block diagram schematically of the braking device in the vehicle according to the embodiment of the present invention. FIG. 3 is a correlation chart between time to collision and distance showing the case where there is no driver's braking request. FIG. 4 is a correlation chart between time to collision and distance showing the case where there is driver's urgent braking request. FIG. 5 is a correlation chart between time to collision and distance showing the case where there is no driver's urgent braking request. FIG. 6 is a correlation chart between time to collision and distance showing the case of entering a normal state after a pre-collision state has been determined. FIG. 7 is a flowchart showing detailed control of the braking device in the vehicle according to the embodiment of the present invention.

As shown in FIG. 1, a vehicle according to this embodiment includes an engine 1, a transmission 2, a propeller shaft 3, front wheels 4, rear wheels 5, a brake pedal 6, a braking pressure sensor 7, an object detecting sensor 8 (object detecting means), a vehicle speed sensor 9, a speaker 10 (annunciation means), disc brakes 11 (braking means), and a CPU 12.

Output of the engine 1 is transmitted to an input shaft, and rotation of the output shaft of the transmission 2 is transmitted to the rear wheels 5, which are driving wheels, via the propeller shaft 3.

The brake pedal 6 manipulated by the driver is connected to the braking pressure sensor 7, and the braking pressure sensor 7 detects change in braking pressure developed due to the brake pedal 6 being depressed by the driver, and outputs a detection signal to the CPU 12.

The object detecting sensor 8 outputs a laser beam or electromagnetic waves such as millimeter waves to the vehicle front, detects relative distance and relative speed of the vehicle and the object based on the resulting reflected waves, and outputs a detection signal to the CPU 12.

The vehicle speed sensor 9 detects the current speed of the vehicle based on the revolution speed and the like of the engine 1, and outputs a detection signal to the CPU 12.

The speaker 10 outputs a buzzer sound or other sounds according to signals from the CPU 12.

The disc brakes 11 are provided to the front wheels 4 and the rear wheels 5, and generate braking force on the respective wheels in conformity with signals from the CPU 12.

As shown in the block diagram of FIG. 2, the CPU 12 includes a determination unit (a first determining means and a second determining means) 13, a forced braking instruction unit (forced braking instructing means) 14, and a braking control unit (braking control means) 15.

The determination unit 13 determines based on the relative distance and relative speed of the vehicle and the object detected by the object detecting sensor 8 and the speed and accelerated velocity of the vehicle detected by the vehicle speed sensor 9 whether it is in a pre-collision state with a high possibility of the vehicle making contact with the object. More specifically, when relative distance between the vehicle and the object is less than a predetermined threshold, or when relative speed that the vehicle approaches the object is greater than a predetermined threshold, or when value of time to collision (TTC) obtained by dividing the relative distance by the relative speed is less than 3.0 seconds, the determination unit 13 determines that it is in a first pre-collision state with a high possibility of the vehicle making contact with the object. Furthermore, when the value of TTC is less than 0.8 seconds, the determination unit 13 determines that it is in a second pre-collision state with a higher possibility of the vehicle making contact with the object than in the first pre-collision state. When the determination unit 13 determines that it is in the first pre-collision state, the determination unit outputs a signal to the speaker 10 to operate the speaker 10, and generates a warning (buzzer sound or other sounds) to annunciate that there is a high possibility of the vehicle making contact with the object. Furthermore, when the determination unit 13 determines that it is in the second pre-collision state, it outputs a signal to the braking control unit 15, which will execute automatic braking described later accordingly.

The forced brake instruction unit 14 determines based on existence of a signal from the braking pressure sensor 7 whether or not there is a braking request from the driver. Namely, when the braking pressure sensor 7 has detected that the driver has depressed the brake pedal 6, it is determined that there is a braking request from the driver. Furthermore, when a braking request is received from the driver (when the driver has depressed the brake pedal 6), the forced braking instruction unit 14 determines whether or not the braking request is urgent (i.e., whether or not the behavior of depressing the brake pedal is really urgent). More specifically, when change in braking pressure is greater than a first predetermined value and change in derivative value of the braking pressure is greater than a second predetermined value, the forced braking instruction unit 14 judges based on the braking pressure detected by the braking pressure sensor 7 and change in the derivative value of the braking pressure for a predetermined minute period of time that the braking request from the driver is urgent and outputs a forced brake instruction signal to the braking control unit 15. Furthermore, when change in braking pressure is less than the first predetermined value and change in derivative value of the braking pressure is greater than the second predetermined value, the forced braking instruction unit 14 judges that the braking request from the driver is not urgent and therefore does not output a forced brake instruction signal to the braking control unit 15. Note that when the driver depresses the brake pedal 6 in the normal state with low urgency, the change in braking pressure is less than the first predetermined value and change in derivative value of the braking pressure is less than the second predetermined value.

Upon reception of a signal from the determination unit 13, the braking control unit 15 operates the disc brakes 11 to impose a braking force (a first predetermined braking force) on the vehicle automatically. Moreover, upon reception of a forced braking instruction signal from the forced braking instruction unit 14 before receiving the signal from the determination unit 13, the braking control unit 15 also operates the disc brakes 11 to impose a braking force (a second predetermined braking force) on the vehicle automatically. Furthermore, when the driver depresses the brake pedal 6, the braking control unit 15 then operates the disc brakes 11 to impose a braking force, which corresponds to the braking pressure detected by the braking pressure sensor 7, on the vehicle. Note that in this embodiment, while the braking force automatically generated when the braking control unit 15 has received a forced braking instruction signal, and braking force automatically generated when the braking control unit 15 has received a signal from the determination unit 13 are the same magnitude, and the disc brakes 11 are set to a maximum possible braking force, they may both be different and magnitude thereof is not limited to the maximum braking force.

Next, braking force generated states according to this embodiment are described using FIGS. 3 through 6.

FIG. 3 shows the case where there is no braking request from the driver once in the first pre-collision state (case where the driver does not depress the brake pedal 6). In this case, the CPU 12 executes processing of steps S1 through S8 in FIG. 7 described later.

When TTC becomes 3.0 seconds, it is judged that the vehicle is in the first pre-collision state, and a warning is given from the speaker 10. If the driver does not depress the brake pedal 6 at all thereafter, the vehicle is determined to be in the second pre-collision state when TTC becomes 0.8 seconds, and a large braking force generated automatically is forcedly imposed on the vehicle to stop.

FIG. 4 shows the case where there is a braking request from the driver once in the first pre-collision state and that braking request is determined to be urgent (case where the driver depresses the brake pedal 6 and that behavior is really urgent). In this case, the CPU 12 executes processing of steps S1 through S10 in FIG. 7 described later.

When TTC becomes 3.0 seconds, it is judged that the vehicle is in the first pre-collision state, and a warning is given from the speaker 10. When the driver depresses the brake pedal 6 at timing a before TTC falls below 0.8 seconds, and it is determined to be a behavior requiring urgency, a large braking force generated automatically is forcedly imposed on the vehicle to stop. Namely, in the case where the driver depresses the brake pedal 6 promptly (after TTC falls below 3.0 seconds and before it falls below 0.8 seconds) in response to the warning and emergency braking of the vehicle is performed, a braking force generated automatically is imposed on the vehicle to stop at an earlier timing than when this emergency braking is not performed (indicated by a dashed line in FIG. 4). Note that in FIGS. 4 through 6, periods of time where values of TTC are between a and b are times taken for determination of whether or not behavior of depressing the brake pedal 6 requires urgency, and the respective drawings show cases where braking force has been generated by depressing the brake pedal 6. However, from a to b is a very minute period of time, the braking force generated in response to depressing the brake pedal 6 is minute, and is not even always generated.

FIG. 5 shows the case where there is a braking request from the driver once in the first pre-collision state, that braking request is determined to be not urgent, and braking manipulation is continued by the driver (case where the driver depresses the brake pedal 6, that behavior is determined normal braking state in which urgency is not required, and depression of the brake pedal 6 is continued thereafter). In this case, the CPU 12 executes processing of steps S1 through S11 in FIG. 7 described later.

When TTC becomes 3.0 seconds, it is determined that the vehicle is in the first pre-collision state, and a warning is given from the speaker 10. When the driver depresses the brake pedal 6 thereafter with the same behavior as when driving normally at timing a before TTC falls below 0.8 seconds, and it is judged as a behavior not requiring urgency, a braking force generated automatically is not imposed on the vehicle, and a braking force (braking force corresponding to the braking pressure detected by the braking pressure sensor 7) corresponding to amount of depressing the braking pedal 6 being continuously depressed is imposed on the vehicle. Note that in this case, when TTC falls below 0.8 seconds without the vehicle coming to a stop, the vehicle is determined to be in the second pre-collision state, and a larger braking force generated automatically than that generated by the driver depressing the brake pedal 6 is imposed on the vehicle to stop.

Namely, in the case where the driver depresses the brake pedal 6 to conduct normal braking manipulation from when it is determined to be in the first pre-collision state until it is determined to be in the second pre-collision state (i.e., from when TTC is determined to fall below 3.0 seconds until it is determined to fall below 0.8 seconds), during the period until automatic braking is executed (i.e., during the period until TTC is determined to fall below 0.8 seconds), the vehicle is braked by the braking force generated according to the driver's braking manipulation without a large automatic braking force being forcedly imposed on the vehicle. Note that the chain double-dashed line in the drawings indicates the case where the driver depresses the brake pedal 6 promptly (before TTC falls below 0.8 seconds) in response to a warning to perform emergency braking of the vehicle, and the dashed line in the drawings indicates the case where emergency braking is not performed.

FIG. 6 shows the case where there is a braking request from the driver once in the first pre-collision state, that braking request is determined to be not urgent, and braking manipulation is not performed by the driver thereafter (case where after the driver depresses the brake pedal 6, the driver judges that there is no risk of making contact with the object and immediately releases the brake pedal 6, and does not depress the brake pedal 6 thereafter, namely the case of brake manipulation due to false recognition). In this case, the CPU 12 executes processing of steps S1 through S7 and steps 9 through S11 described later.

In this case, only an instantaneous braking force is imposed on the vehicle when the brake pedal 6 is depressed by the driver. Furthermore, this example shows the case where automatic braking is not activated when TTC is 0.8 seconds because the object detected when TTC is 3.0 seconds is not detected when TTC becomes 0.8 seconds.

Next, control processing executed by the CPU 12 according to this embodiment is described using the flowchart of FIG. 7.

This processing starts by driving the engine of the vehicle and is executed every predetermined period.

First, the object detecting sensor 8 detects an object and determines whether or not a detection signal thereof has been input (step S1). When a detection signal has been input from the object detecting sensor 8, relative distance, relative speed, and vehicle speed are detected based on signals received from the object detecting sensor 8 and the vehicle speed sensor 9 (step S2), and TTC is calculated based on the detected relative distance, relative speed, and vehicle speed (step S3). Note that in step S1, when a detection signal has not be received from the object detecting sensor 8, processing proceeds to step S11, and normal braking force is generated in response to the driver's brake manipulation.

Next, it is determined whether or not TTC is less than 3.0 second (whether or not it is in the first pre-collision state) (step S4), and when it is determined that TTC is less than 3.0 seconds, processing proceeds to step S5. In step S5, it is determined whether or not generation of a warning annunciating that it is in the first pre-collision state is completed, and processing proceeds to step S7 when it has already been completed. Meanwhile, when a warning has not yet been generated or is being generated, processing proceeds to step S6, a warning is generated or continued, and then proceeds to step S7. Meanwhile, in step S4, since there is a high possibility that the relationship with the object is in a normal state not requiring urgency when the TTC has been determined to exceed 3.0 seconds, processing proceeds to step S11, and normal braking force is generated in response to the driver's brake manipulation.

In step S7, it is determined whether or not TTC is less than 8 second (whether or not it is in the second pre-collision state), and when it is less than 0.8 seconds, processing proceeds to step S8 and a braking force generated automatically is generated. Meanwhile, when it is determined that TTC has exceeded 0.8 seconds, it is then determined whether or not automatic braking is being executed (step S9).

In step S9, when it is determined that automatic braking is being executed, processing proceeds to step S8 and automatic generation of braking force is continued.

Meanwhile, in step S9, when it has been determined that automatic braking has not yet been executed, it is further determined whether or not there is an urgent braking request from the driver (whether or not there has been emergency brake manipulation by the driver) (step S10). If it is determined that there has been emergency brake manipulation, there is a high possibility that making contact with an object must be avoided. Therefore, processing proceeds to step S8 and a braking force is generated automatically. Otherwise, if it is determined that there has not been emergency brake manipulation, normal braking force is then generated in response to the driver's brake manipulation (step S11). Note that examples where no emergency brake manipulation has been determined include the case of no brake manipulation as well as the case of normal brake manipulation, brake manipulation due to false recognition, and the like.

As described above, according to this embodiment, when a braking request from the driver is detected by the braking pressure sensor 7 from when the determination unit 13 determines that it is in the first pre-collision state until it is determined to be in the second pre-collision state, the braking control unit 15 activates the disc brakes 11 to impose on the vehicle a braking force generated automatically. Namely, by the driver performing braking manipulation when in the first pre-collision state, braking force generated automatically may be imposed on the vehicle before a predetermined period has elapsed, and the vehicle may be sufficiently decelerated.

Furthermore, when the forced braking instruction unit 14 has determined that a braking request from the driver is urgent, the braking control unit 15 operates the disc brakes 11 to impose on the vehicle a braking force generated automatically. When the forced braking instruction unit 14 has determined that a braking request from the driver is not urgent, the braking control unit 15 operates the disc brakes 11 to impose on the vehicle only normal braking force corresponding to the braking pressure detected by the braking pressure sensor 7. As a result, when the driver judges that it is unnecessary to hastily put on the brake of the vehicle and performs normal brake manipulation, improper imposition of excessive braking force on the vehicle may be prevented, and inconveniences such as uncomfortable feeling, poor riding comfort, and load collapse during driving operation may be avoided.

Note that a high possibility of the vehicle making contact with an object may be annunciated to the driver by luminescent device such as a lamp emitting instead of using the speaker 10.

Furthermore, while the braking means of this embodiment is given as the disc brakes 11 generating braking force on the wheels, the braking device is not limited to one that generates braking force on the wheels as long as it can generate braking force.

While the embodiment applying the invention devised by the inventers has been described thus far, the present invention is not limited to the descriptions and drawings constituting a part of the disclosure of the present invention according to this embodiment. Namely, it should be added that other embodiments, working examples, and operational technologies devised by person(s) skilled in the art according to this embodiment are all naturally included within the scope of this invention.

### [Industrial Applicability]

The braking device in a vehicle of the present invention is applicable to a vehicle which includes an object detecting means and a function of forcibly imposing a predetermined braking force, and by the driver performing brake manipulation when in the first pre-collision state, braking force generated automatically may be imposed on the vehicle, and the vehicle may be sufficiently decelerated.

## Claims

1. A vehicle braking device, comprising:
object detecting means of detecting relative distance and relative speed of a vehicle relative to an object existing in front of a vehicle in the traveling direction of the vehicle;
braking means of generating a braking force on the vehicle;
first determination means of determining based on the relative distance and the relative speed detected by the object detecting means whether or not the vehicle is in a first pre-collision state with a high possibility of the vehicle and the object making contact;
second determining means of determining based on the relative distance and the relative speed detected by the object detecting means whether or not the vehicle is in a second pre-collision state with a higher possibility of the vehicle and the object making contact than in the first pro-collision state;
annunciation means of annunciating to a driver of the vehicle that it is in the first pre-collision state when the first determination means has determined it is in the first pre-collision state;
braking control means of operating the braking means to generate a first predetermined braking force when the second determination means has determined it is in the second pre-collision state after the first determination means has determined it is in the first pre-collision state; and
forced braking instruction means of detecting existence of a braking request from the driver, and outputting a forced braking instruction signal when a braking request from the driver has been detected, wherein
the braking control means operates the braking means to generate a second predetermined braking force upon reception of the forced braking instruction signal from the forced braking instruction means from when the first determination means has determined it is in the first pre-collision state until the second determination means determines it is in the second pre-collision state.

2. The vehicle braking device of Claim 1, wherein
the forced braking instruction means determines whether or not a detected braking request from the driver is urgent, outputs the forced braking instruction signal when the request is determined to be urgent, and does not output the forced braking instruction signal when the request is determined to be not urgent.
